# EUROPEAN PATENT APPLICATION

(11) **EP 2 402 641 A1**
(43) Date of publication of application: **04.01.2012**
(21) Application number: 11004952.5
(22) Date of filing: 16.06.2011
(51) Int. Cl.: F16L 37/56, F16L 39/00, F16L 47/00, H01R 13/00, H01R 13/52, F01N 13/00, G01M 15/10

(54) **Gas distrubution unit and method of assembling it**

(30) Priority: 29.06.2010 JP 2010147422
(71) Applicant: Sumitomo Wiring Systems, Ltd., Yokkaichi-shi, Mie 510-8503 (JP)
(72) Inventor: Shinoda, Koji, Yokkaichi-city Mie 510-8503 (JP)
(74) Representative: Müller-Boré & Partner Patentanwälte

(57) **Abstract**

An object of the present invention is to improve assembling operability by facilitating an arrangement of gas flow passages in a case.

A gas distribution unit includes a block body 11 made of synthetic resin and to be fixed in a case 20 of an exhaust gas measuring apparatus. An intake passage 15 for device to be connected to an intake pipe 54 and an intake connecting portion 42, an exhaust passage 16 for device to be connected to an exhaust pipe 28 and an exhaust connecting portion 43, and air passages 14 for measuring device to be connected to pipes 53 for measuring device and intake connecting portions 61 are provided in the block body 11

## Description

### Gas Distribution Unit And Method Of Assembling It

The present invention relates to a gas distribution unit and to a method of assembling it.

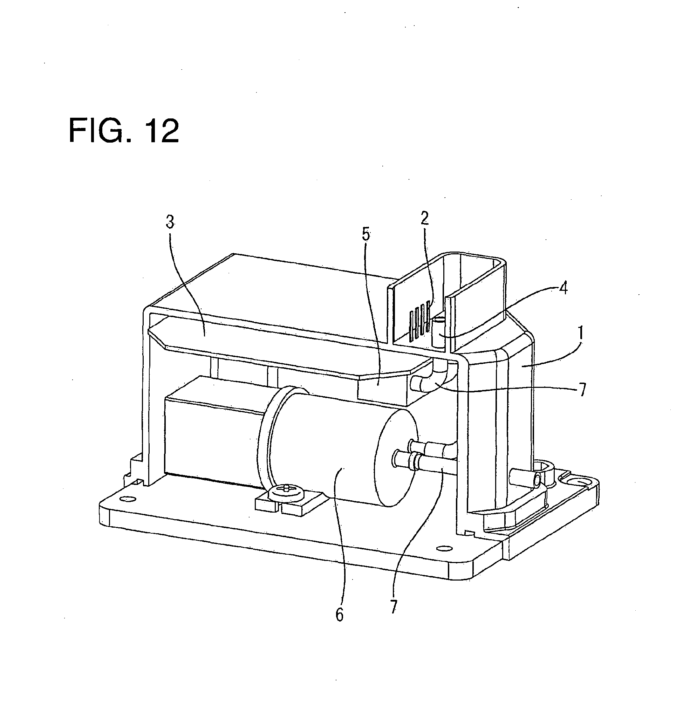

For example, Japanese Unexamined Patent Publication No. 2010-62035 discloses an example of a connector in which a joint pipe for introducing exhaust gas from an exhaust pipe to an exhaust gas measuring apparatus to measure components of the exhaust gas of an automotive vehicle and a joint terminal for introducing power from a power feeding apparatus are integrally assembled. This connector is provided on a case 1 of the exhaust gas measuring apparatus installed in the automotive vehicle, for example, as shown in FIG. 12. A joint terminal 2 mounted in the connector is connected to a control board 3 in the case 1 and joint pipes 4 are connected to various devices disposed in the case such as a measuring device 5 and a pump 6 by gas tubes 7. By the connection of a mating connector to this connector, exhaust gas is supplied to the various devices in the exhaust gas measuring apparatus and power is supplied to the control board 3.

Since the exhaust gas measuring apparatus is installed in the automotive vehicle, miniaturization of the case has been studied and an internal space of the case has become very small. Thus, in the case of connecting the joint pipes of the connector and the respective devices by the gas tubes 7, assembling operability is very poor due to difficulty in inserting operator's hands into the case. Further, if a flexible hose is forcibly bent in conformity with the internal space of the case, there is a problem of closing a gas flow passage for the exhaust gas such as by squashing of the hose.

The present invention was developed in view of the above situation and an object thereof is to improve assembling operability by facilitating an arrangement of gas flow passages in a case.

This object is solved according to the invention by the features of the independent claims. Preferred embodiments of the invention are subject of the dependent claims.

According to the invention, there is provided a gas distribution unit including a block body made of synthetic resin and to be fixed in a case of an exhaust gas measuring apparatus, comprising an intake passage for device having one end to be connected to an intake pipe provided on the case and the other end to be connected to an intake connecting portion provided on a device in or at the case; an exhaust passage for device having one end to be connected to an exhaust pipe provided on the case and the other end to be connected to an exhaust connecting portion provided on the device; and an air passage for measuring device having one end to be connected to a pipe for measuring device provided on the case and the other end to be connected to an intake connecting portion provided on a measuring device in or at the case, the intake passage for device, the exhaust passage for device and the air passage for measuring device being provided in the block body.

According to the thus constructed gas distribution unit, by forming the intake passage for device, the exhaust passage for device and the air passage for the measuring device at positions corresponding to the respective connecting portions and the respective pipes beforehand in the block body, the device and the measuring device can be easily joined with the respective pipes in the case. Further, since the block body is made of synthetic resin, problems such as closure of gas flow passages due to bending of the block body can be prevented.

The present invention is preferably embodied to have the following constructions.

The case may include a base portion to which the block body is to be fixed, and a cover to be mounted on the base portion to cover a surface (particularly the upper surface) of the base portion.

The intake pipe and the pipe for measuring device may be so provided on an outer wall (particularly the upper wall) of the cover as to penetrate through the cover;

A connecting tube portion for device provided at the one end of the intake passage for device and a connecting tube portion for measuring device provided at the one end of the air passage for measuring device may be provided on the upper surface of the block body.

The connecting tube portion for device may be connected to the intake pipe and the connecting tube portion for measuring device may be connected to the pipe for measuring device when the cover is mounted on the base portion.

According to the above construction, the intake pipe and the pipe for measuring device can be easily connected to the block body by mounting the cover after the block body is fixed to the base portion.

A seal member for sealing between the inner surface of the cover and the upper surface of the block body may be provided at one or more outer peripheral portions of base end portions of the connecting tube portion for device and the connecting tube portion for measuring device.

According to this construction, a clearance between the cover and the block body can be sealed in an airtight manner.

The cover may include a plurality of pipes for measuring device; the measuring device may include a plurality of intake connecting portions; and the block body may be formed with a plurality of air passages for measuring device substantially corresponding to the pipes for measuring device and the intake connecting portions.

According to this construction, the plurality of air passages for measuring device can be collectively connected to the measuring device and the pipes for measuring device, wherefore assembling operability can be improved.

An annular seal may be provided between the base portion and the cover.

One or more seal members may be provided to seal clearances between the intake connecting portions and the connecting pipes for measuring device to prevent the exhaust gas or fluid from flowing into the case.

One or more seal members may be provided to seal a clearance between the intake connecting portion and the intake passage for device to prevent the exhaust gas or fluid from flowing into the case.

A connector may be provided on the case and may includes: one or more joint pipes to be connected to one or more respective mating joint pipes provided in a mating connector to introduce exhaust gas supplied from the unillustrated mating connector into the case and/or one or more joint terminals to one or more respective mating terminals provided in the mating connector.

According to another aspect of the invention, there is provided a method of assembling a gas distribution unit, comprising the following steps (in any order): arranging a block body made of synthetic resin in or to a case of an exhaust gas measuring apparatus whereby one end of an exhaust passage is connected to an exhaust pipe provided on the case; connecting one end of an intake passage for device to an intake pipe provided on the case and the other end of the intake passage to an intake connecting portion provided on a device in or at the case; connecting the exhaust passage for device to an exhaust connecting portion provided on the device; and connecting one end of an air passage for measuring device to a pipe for measuring device provided on the case and the other end of the air passage to an intake connecting portion provided on a measuring device in or at the case, wherein the intake passage for device, the exhaust passage for device and the air passage for measuring device being provided in the block body.

Particularly, arranging the block body in or to the case may comprise fixing the block body to a base portion of the case and may further comprise mounting a cover on the base portion to cover a surface of the base.

Further particularly, the intake pipe and the pipe for measuring device are so provided on an outer wall of the cover as to penetrate through the cover.

Still further particularly, a connecting tube portion for device provided at the one end of the intake passage for device and a connecting tube portion for measuring device provided at the one end of the air passage for measuring device may be provided on the outer surface of the block body, and/or the connecting tube portion for device is to be connected to the intake pipe and the connecting tube portion for measuring device may be connected to the pipe for measuring device when the cover is mounted on the base portion.

According to the above, assembling operability can be improved by facilitating an arrangement of gas flow passages in a case.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a section showing a state where a gas distribution unit according to one embodiment is assembled into a case of an exhaust gas measuring apparatus,
FIG. 2 is a front view of the gas distribution unit according to the embodiment,
FIG. 3 is a plan view of the gas distribution unit,
FIG. 4 is a side view of the gas distribution unit,
FIG. 5 is a section along V-V of FIG. 2,
FIG. 6 is a section along VI-VI of FIG. 2,
FIG. 7 is a section along VII-VII of FIG. 2,
FIG. 8 is a section showing a state where the gas distribution unit according to embodiment is mounted on a base portion,
FIG. 9 is a section showing a state where the gas distribution unit and an electric pump are mounted on the base portion,
FIG. 10 is a section showing a state where a measuring device and a seal member are fixed to the gas distribution unit fixed to the base portion,
FIG. 11 is a section showing a state where a control board is assembled with a cover, and
FIG. 12 is a cutaway perspective view showing a conventional exhaust gas measuring apparatus.

### <Embodiment>

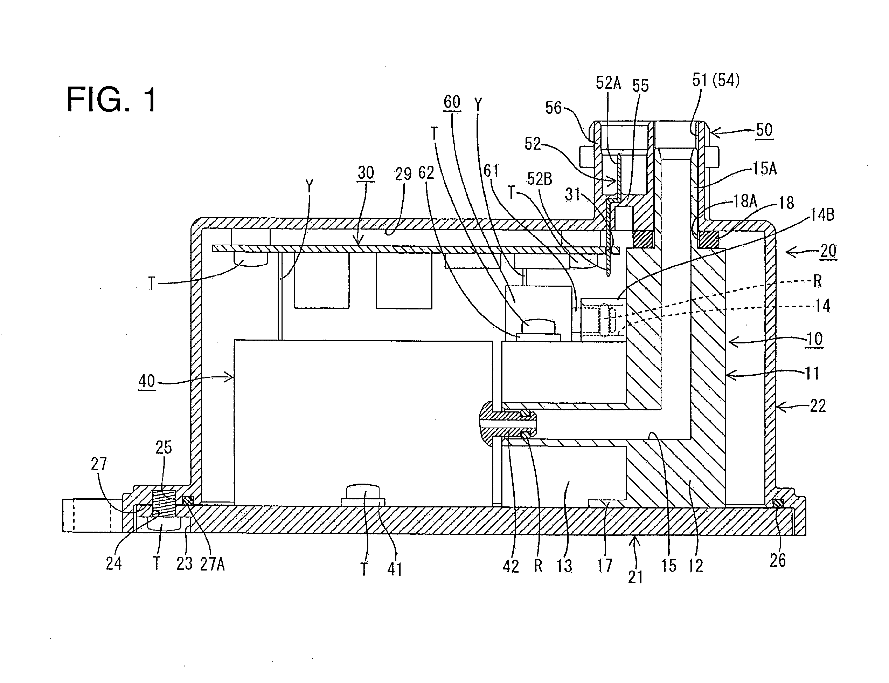

Hereinafter, one particular embodiment of the present invention is described with reference to FIGS. 1 to 11.

A gas distribution unit 10 according to this embodiment is to be mounted in or to or on a case 20 of a (particularly substantially block-shaped) exhaust gas measuring apparatus installed or installable in an automotive vehicle as shown in FIG. 1.

The exhaust gas measuring apparatus includes, as shown in FIG. 1, the (particularly substantially box-shaped) case 20 made e.g. of synthetic resin, at least one control board 30 to be assembled into the case 20, and an electric pump or fluid displacement member 40 to be assembled into the case 20.

The case 20 includes a base portion 21 made e.g. of synthetic resin and a cover 22 made e.g. of synthetic resin and adapted to at least partly cover the base portion 21, particularly to cover the substantially entire upper surface of the base portion 21.

The base portion 21 particularly substantially is in the form of a (particularly rectangular) plate and one or more screw accommodating portions 23 having such a depth that the head of a tapping screw T can be at least partly accommodated therein are provided at (particularly one or more (e.g. four) corners of the bottom surface of) the base portion 21. An insertion hole 24, into which a shaft portion of the tapping screw T is at least partly insertable, is provided in (particularly the center of) each screw accommodating portion 23. The base portion 21 and the cover 22 are to be fixed to each other by screwing the tapping screws T inserted into the respective insertion holes 24 from the bottom side of the base portion 21 into one or more respective (e.g. four) screw holes 25 formed at (particularly one or more, e.g. four, corners of an opening edge portion of) the cover 22 as shown in FIG. 1.

The electric pump 40 (particularly substantially in the form of a rectangular column) is fixed to (particularly the upper surface of) the base portion 21 as shown in FIG. 1. This electric pump 40 includes one or more, particularly a pair of pump fixing pieces 41 particularly at the substantially opposite lateral (left and right) sides. Tapping screws T are inserted into unillustrated screw holes of the pump fixing pieces 41 and screwed into the base portion 21, whereby the electric pump 40 is assembled with the base portion 21.

On the other hand, the cover 22 is hood-shaped as shown in FIG. 1 and at least one stepped or widened portion 27 widened outwardly (particularly substantially over the entire circumference) is provided at or near the opening edge portion of the cover 22 as shown in FIG. 1. This stepped portion 27 is, as shown in FIG. 1, formed with at least one annular groove 27A having an annular seal 26 fitted at the inner sides of the screw holes particularly substantially over the entire circumference as shown in FIG. 1. This annular seal 26 prevents the entrance of water or fluid into the case 20 through a clearance between the base portion 21 and the cover 22.

As shown in FIG. 1, a connector 50 is so integrally or unitarily formed to (particularly the upper wall of) the cover 22 as to substantially vertically penetrate through the cover 22.

This connector 50 includes one or more (e.g. four) joint pipes 51 and one or more (e.g. four) joint terminals 52. The (e.g. four) joint pipes 51 substantially are cylindrical and/or arranged substantially side by side and/or integrally or unitarily to the connector 50 while penetrating substantially straight through the connector 50 from the upper end to the lower end. When the connector 50 is connected to an unillustrated mating connector, these one or more joint pipes 51 are connected to unillustrated one or more respective mating joint pipes provided in the mating connector to introduce exhaust gas supplied from the unillustrated mating connector into the case 20. Note that, out of these joint pipes 51, three particularly may serve as pipes 53 for measuring device and the remaining one may serve as an intake pipe 54.

As shown in FIG. 1, each joint terminal 52 outwardly or vertically extends while being cranked at its central or intermediate position. Cranked central or intermediate parts of the joint terminals 52 particularly are integrally assembled in a terminal holding portion 55 provided in a vertical central or intermediate part of the connector 50 by insert molding. The plurality of (e.g. four) joint terminals 52 are held substantially side by side in an arrangement direction of the joint pipes 51 in the terminal holding portion 55.

Upper end parts of the joint terminals 52 serve as upper-end connecting portions 52A and project from the back wall of a receptacle 56 provided above the terminal holding portion 55. The receptacle 56 is open outward or upward and formed such that the unillustrated mating connector is at least partly fittable thereinto. When the mating connector is at least partly accommodated into the receptacle 56, the one or more upper-end or distal connecting portions 52A are electrically connected to one or more respective (unillustrated) mating terminals provided in the mating connector. Lower end parts of the joint terminals 52 serve as lower-end or inner connecting portions 52B and substantially projects straight inwardly or downward from the rear or lower end surface of the terminal holding portion 55.

The lower-end connecting portions 52B are to be at least partly inserted through through holes 31 formed in the control board 30 to be electrically connected to the control board 30. Note that the control board 30 particularly is to be assembled with the cover 22 by inserting one or more tapping screws T into respective (unillustrated) screw holes formed in a plate surface of the control board 30 and screwing the one or more tapping screws T into an upper inner surface 29 of the cover 22. Further, this control board 30 is to be electrically connected to the electric pump 40 mounted on the base portion 21 by at least one lead wire Y.

The gas distribution unit 10 fixed to the base portion 21 of the exhaust gas measuring apparatus includes a block body 11 made e.g. of synthetic resin.

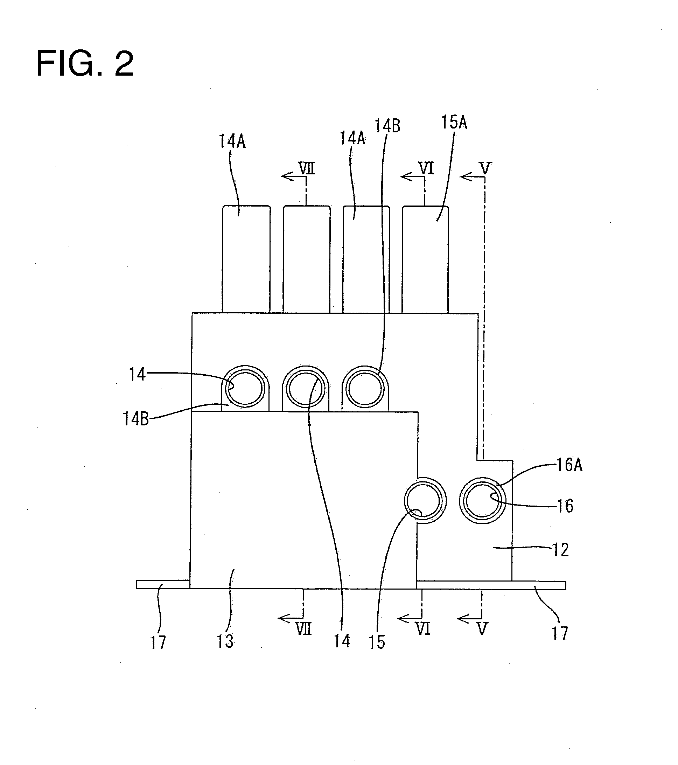

This block body 11 particularly includes, as shown in FIGS. 2 to 7, a large box portion 12 formed to have a stepped lateral (right) surface in front view and/or a small box portion 13 (particularly substantially rectangular in front view) and projecting from the front end surface of the large box portion 12.

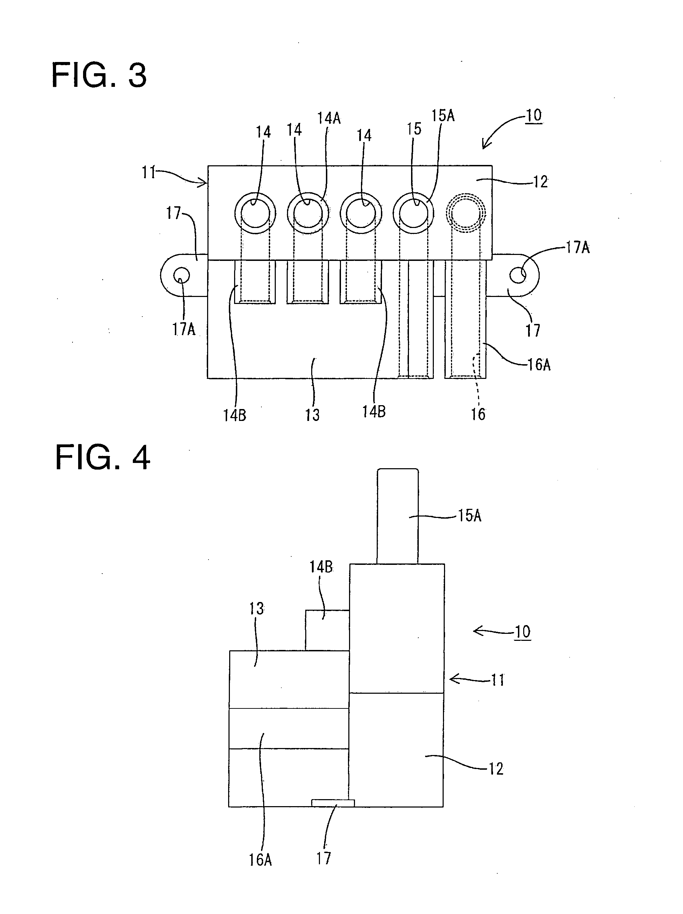

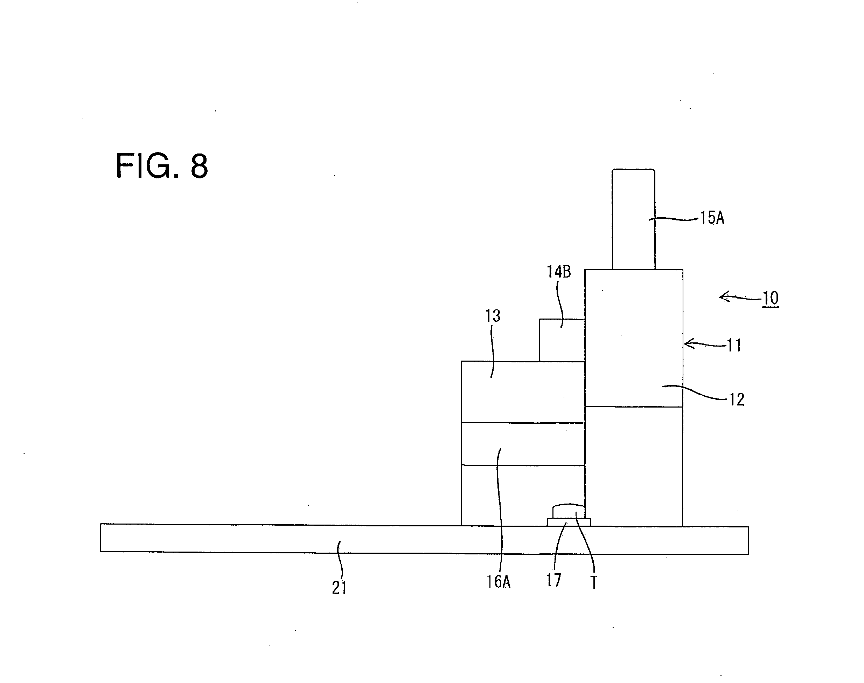

One or more air passages 14 for measuring device extending through the large and small box portions 12, 13, at least one intake passage 15 for device extending through the large and small box portions 12, 13 and/or an exhaust passage 16 for device extending through the large box portion 12 are formed in the large and small box portions 12, 13. Further, one or more, particularly a pair of fixing pieces 17 are provided at (particularly the substantially opposite left and right sides of) a boundary between the large and small box portions 12, 13. A screw insertion hole 17A is formed in (particularly substantially the center of) each fixing piece 17 as shown in FIG. 3. One or more tapping screws T are to be at least partly inserted into these screw insertion holes 17A and screwed into the base portion 21 as shown in FIG. 8, whereby the block body 11 is fixed to the base portion 21.

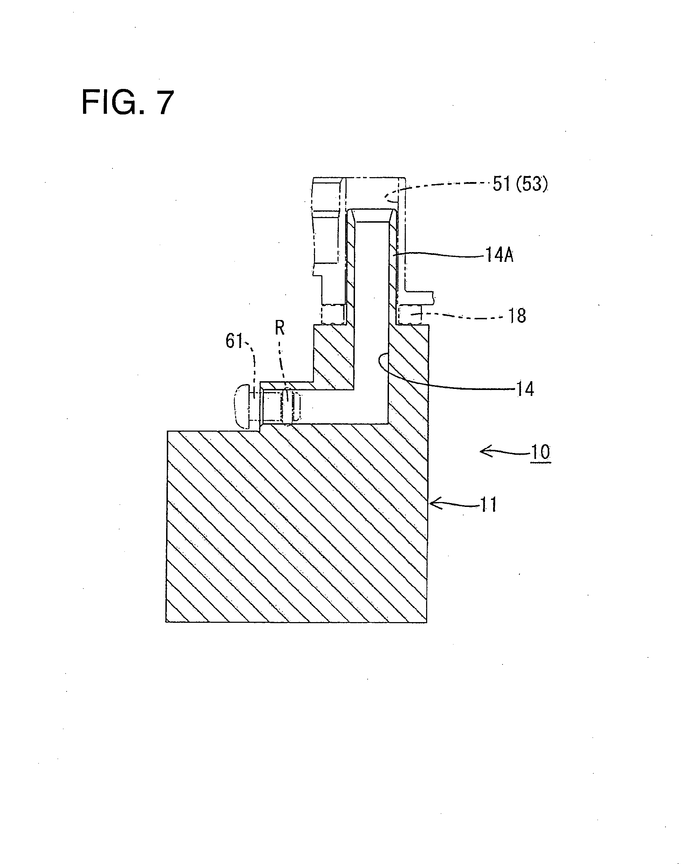

The one or more (e.g. three) air passages 14 for measuring device particularly are L-shaped or bent while extending from the upper side to the front side and/or arranged (particularly substantially side by side) in the large box portion 12 as shown in FIGS. 3 and 7. One end of the (each) air passage 14 for measuring device serves as a (particularly substantially cylindrical) connecting tube portion 14 for measuring device substantially extending straight upward from the upper end surface of the large box portion 12 and/or the other end thereof serves as a connecting pipe 14B for measuring device projecting from a side surface of the large box portion 12 at the side of the small box portion 13 and open forward as shown in FIGS. 1 to 3 and 7.

Particularly, the one or more connecting tube portions 14A for measuring device are set to have substantially the same outer diameter as the inner diameter of the joint pipes 51 of the connector 50 provided in the cover 22. Further, the connecting tube portion(s) 14A for measuring device is/are arranged at position(s) corresponding to the pipe(s) 53 for measuring device particularly out of the joint pipes 51 provided in the cover 22. Thus, the connecting tube portions 14A for measuring device are at least partly accommodated and fitted into the connecting pipes 14B for measuring device when the cover 22 is assembled with the base portion 21.

The connecting pipes 14B for measuring device are to be connected to a measuring device 60 fixed to the upper end surface of the small box portion 13. This measuring device 60 is connected to the block body 11 particularly by inserting and fitting one or more intake connecting portions 61 provided on a side surface thereof into the connecting pipes 14B for measuring device. Note that the measuring device 60 is to be fixed to the small box portion 13 particularly by screwing one or more tapping screws T into measuring device fixing pieces 62 provided at the opposite widthwise sides. Further, this measuring device 60 is to be electrically connected to the control board 30 by at least one lead wire Y.

One or more O-rings R are mounted on the outer peripheral surfaces of the intake connecting portions 61 to be held in close contact with the outer peripheral surfaces of the intake connecting portions 61 and the inner peripheral surfaces of the connecting pipes 14B for measuring device. These one or more 0-rings R seal clearances between the outer peripheral surface of the intake connecting portions 61 and the inner peripheral surfaces of the connecting pipes 14B for measuring device to prevent the exhaust gas or fluid from flowing into the case 20.

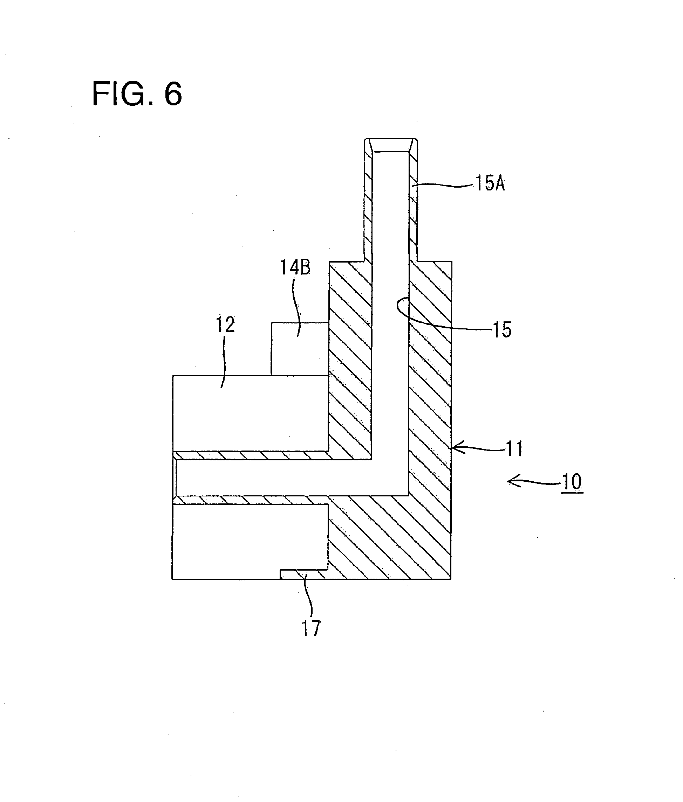

Similar to the air passages 14 for measuring device, the intake passage 15 for device particularly is L-shaped or bent while extending from the upper side to the front side in the large box portion 12 as shown in FIG. 6. One end of the intake passage 15 for device serves as a (particularly substantially cylindrical) connecting tube portion 15A for device substantially extending straight upward or outward from the upper end surface of the large box portion 12 and the other end thereof is open in the front end surface of the small box portion 13 as shown in FIGS. 1 to 3. Further, the intake passage 15 for device is formed to cause a side surface of the small box portion 13 to bulge out.

Similar to the connecting tube portions 14A for measuring device, the connecting tube portion 15A for device particularly is set to have substantially the same outer diameter as the inner diameter of the joint pipes 51 of the connector 50 provided in the cover 22 as shown in FIG. 1. Further, the connecting tube portion 15A for device is arranged at a position substantially corresponding to the intake pipe 54 out of the joint pipes 51 provided in the cover 22. Thus, the connecting tube portion 15A for device is to be at least partly accommodated and fitted into the intake pipe 54 as shown in FIG. 1 when the cover 22 is assembled with the base portion 21.

At this time, at least one surface seal 18 (corresponding to a particular seal member) pressed between the upper inner surface 29 of the cover 22 and the upper or distal end surface of the large box portion 12 is provided at the outer peripheries of base end portions of the connecting tube portions 14A for measuring device and the connecting tube portion 15A for device as shown in FIG.1. This surface seal 18 particularly is one size (or somewhat) smaller than the outer shape of the upper end surface of the large box portion 12. This surface seal 18 includes one or more (e.g. four) tube insertion holes 18A substantially formed along the outer peripheral surfaces of the connecting tube portions 14A for measuring device and the connecting tube portion 15A for device. This surface seal 18 seals between the upper inner surface 29 of the cover 22 and the upper end surface of the large box portion 12 as shown in FIG. 1, thereby preventing the exhaust gas or fluid from flowing into the case 20.

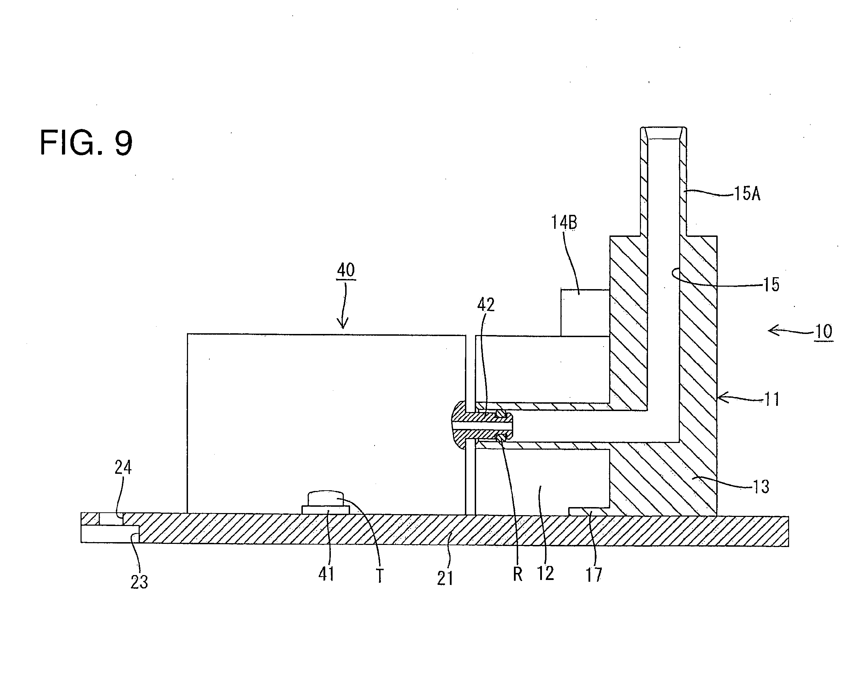

On the other hand, as shown in FIGS. 1 and 9, at least one intake connecting portion 42 provided on (particularly a side surface of) the electric pump 40 at least partly is inserted and fitted into the opening of the intake passage 15 for device open in the front end surface of the small box portion 13. Note that an O-ring R is mounted on the outer peripheral surface of the intake connecting portion 42 to be held in close contact with the outer peripheral surface of the intake connecting portion 42 and the inner peripheral surface of the intake passage 15 for device. This 0-ring R seals a clearance between the outer peripheral surface of the intake connecting portion 42 and the inner peripheral surface of the intake passage 15 for device to prevent the exhaust gas from flowing into the case 20.

As shown in FIGS. 2 to 5, the exhaust passage 16 for device particularly is L-shaped or bent while extending from the front side to the lower side in the large box portion 12. One end of the exhaust passage 16 for device is open in the bottom surface of the large box portion 12 and the other end thereof serves as an exhaust connecting pipe 16A projecting forward from the front end surface of the large box portion 12.

An exhaust pipe 28 projecting upward or outward from the upper or lateral surface of the base portion 21 is to be at least partly inserted and fitted into the opening of the exhaust passage 16 for device in the bottom surface of the large box portion 12. An O-ring R is to be mounted on the outer peripheral surface of this exhaust pipe 28 to be held in close contact with the inner peripheral surface of the exhaust passage 16 for device and the outer peripheral surface of the exhaust pipe 28. This 0-ring R seals a clearance between the inner peripheral surface of the exhaust passage 16 for device and the outer peripheral surface of the exhaust pipe 28 to prevent the exhaust gas from flowing into the case 20.

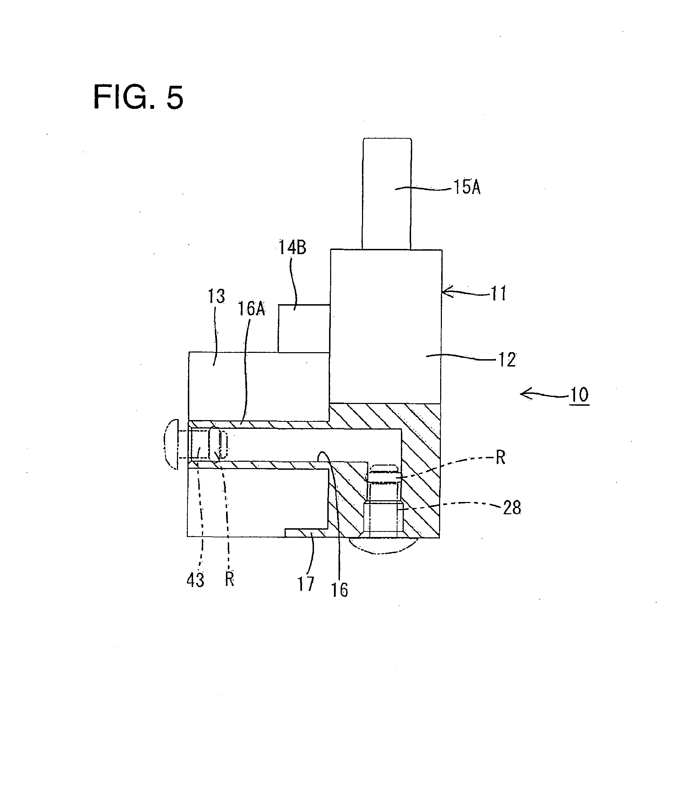

The exhaust connecting portion 42 (particularly substantially arranged side by side with the intake connecting portion 42 on the side surface of the electric pump 40) at least partly is inserted and fitted into the exhaust connecting pipe 16A through the opening as shown in FIG. 5. Note that an O-ring R particularly is to be mounted on the outer peripheral surface of the exhaust connecting portion 43 to be held in close contact with the outer peripheral surface of the exhaust connecting portion 43 and the inner peripheral surface of the exhaust passage 16 for device. This 0-ring R seals a clearance between the outer peripheral surface of the exhaust connecting portion 43 and the inner peripheral surface of the exhaust passage 16 for device to prevent the exhaust gas from flowing into the case 20.

The gas distribution unit 10 of this embodiment is constructed as described above and arranged in the case 20 of the exhaust gas measuring apparatus as described above. Next, how to assemble the exhaust gas measuring apparatus including the gas distribution unit according to this embodiment is described with reference to FIGS. 1, 8 to 11 together with the effects thereof.

First, as shown in FIG. 8, the block body 11 of the gas distribution unit 10 is arranged on the base portion 21 of the case 20 and fixed to the base portion 21 particularly by the one or more tapping screws T. At this time, the block body 11 is so arranged that the exhaust passage 16 for device at least partly is fitted into the exhaust pipe 28 provided on the base portion 21 as shown in FIG. 5.

Subsequently, as shown in FIG. 9, the intake connecting portion 42 of the electric pump 40 at least partly is inserted into the opening of the intake passage 15 for device (particularly substantially from a lateral side of the block body 11) and the exhaust connecting pipe 43 at least partly is inserted and fitted into the exhaust connecting pipe 16A of the exhaust passage 16 for device, thereby connecting the electric pump 40 to the block body 11. Note that the electric pump 40 particularly is fixed to the base portion 21 by fixing the pump fixing pieces 41 of the electric pump 40 to the base portion 21 of the case 20 particularly using the tapping screws T after being connected to the block body 11.

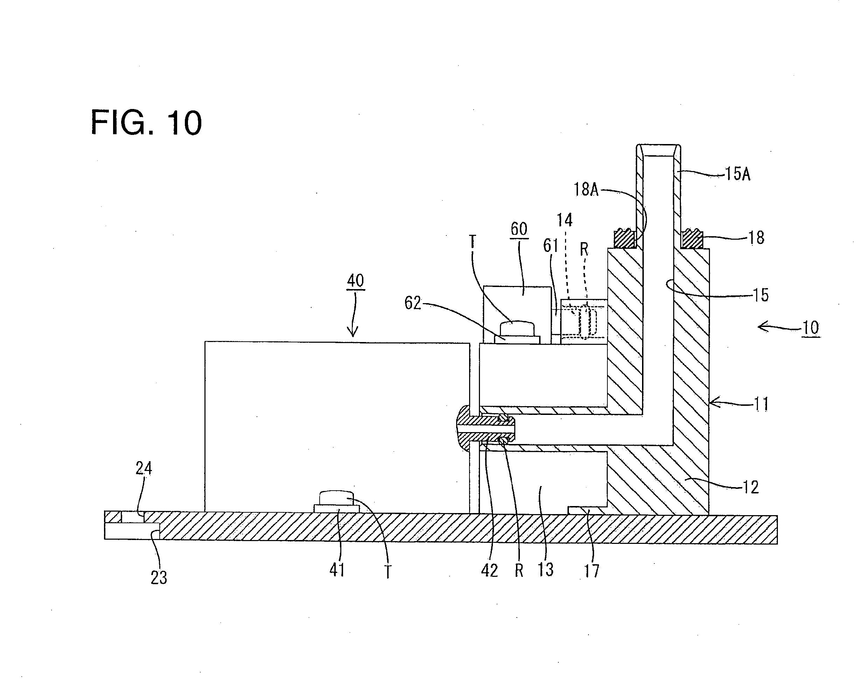

After the electric pump 40 is fixed, the intake connecting portions 61 of the measuring device 60 at least partly are inserted and fitted into the openings of the connecting pipes 14B for measuring device of the block body 11 to connect the measuring device 60 to the block body 11. Note that the measuring device 60 particularly is fixed to the block body 11 by fixing the measuring device fixing pieces 62 of the measuring device 60 to the upper end surface of the small box portion 13 using the one or more tapping screws T after being connected to the block body 11. Further, before the cover 22 is assembled with the base portion 21, the surface seal 18 is mounted on the upper end surface of the large box portion 12 of the block body 11 by inserting the connecting tube portions 14A for measuring device and the connecting tube portion 15A for device through the tube insertion holes 18A of the surface seal 18 (see FIG. 10).

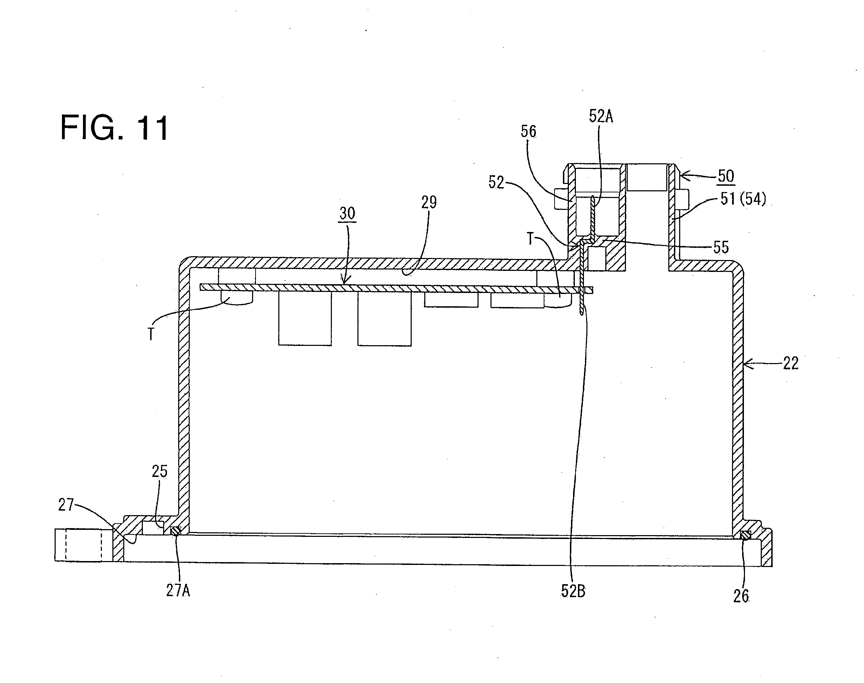

On the other hand, as shown in FIG. 11, the one or more through holes 31 of the control board 30 at least partly are fitted to the lower-end connecting portions 52B of the joint terminals 52 in the connector 50 to electrically connect the control board 30 to the one or more joint terminals 52, and/or the control board 30 is fixed to the upper inner surface 29 of the cover 22 of the case 20 particularly by the one or more tapping screws T. Before the cover 22 is assembled with the base portion 21, the annular seal 26 is mounted in the annular groove 27A of the stepped portion 27 provided at the opening edge portion of the cover 22.

After all the devices and members are assembled with the base portion 21 and the cover 22 in this way, the cover 22 is mounted to cover the base portion 21 (particularly substantially from above) and fixed to the base portion 21 particularly by screwing the one or more tapping screws T into the cover 22 particularly from the bottom surface of the base portion 21. At this time, the connector 50 and the block body 11 can be connected by mounting the cover 22 such that the connecting tube portions 14A for measuring device and the connecting tube portion 15A for device of the block body 11 at least partly are inserted into the joint pipes 51 of the connector 50 in the cover 22. Further, the surface seal 18 mounted on the upper end surface of the large box portion 12 of the block body 11 beforehand particularly is pressed by being squeezed between the upper inner surface 29 of the cover 22 and the upper end surface of the large box portion 12, thereby preventing the exhaust gas from flowing into the case through the clearances between the joint pipes 51 and the connecting tube portions 14A for measuring device and the connecting tube portion 15A for device.

As described above, in the gas distribution unit 10 of this embodiment, the openings of the intake passage for device, the exhaust passage for device and the air passages for measuring device are formed at specified (predetermined or predeterminable) positions where the respective devices are to be mounted, so that the connecting portions of the respective devices can be at least partly inserted into the corresponding openings and the respective pipes and the respective devices can be joined by mounting the respective devices into the case 20. Thus, it is not necessary to arrange and mount gas tubes after the devices are fixed to the case as before, and assembling operability of the exhaust gas measuring apparatus can be drastically improved. Also when an additional device is mounted into the case and the number of gas passages increases as compared with this embodiment, there is no additional step of mounting a gas tube to the added device since gas tubes are not employed.

Further, since the respective gas flow passages are made e.g. of synthetic resin, there is no likelihood that the gas flow passages are bent or folded to be closed, wherefore the exhaust gas can be reliably passed.

When a plurality of intake passages for measuring device are arranged substantially side by side, a plurality of intake connecting portions provided on the measuring device can be collectively fitted. Thus, it is not necessary to connect the intake connecting portions one by one as before and assembling operability can be improved.

Accordingly, to improve assembling operability by facilitating an arrangement of gas flow passages in a case, a gas or fluid distribution unit includes a block body 11 made e.g. of synthetic resin and to be fixed in a case 20 of an exhaust gas measuring apparatus. At least one intake passage 15 for device to be connected to an intake pipe 54 and at least one intake connecting portion 42, an exhaust passage 16 for device to be connected to an exhaust pipe 28 and at least one exhaust connecting portion 43, and one or more air passages 14 for measuring device to be connected to pipes 53 for measuring device and intake connecting portions 61 are provided in the block body 11

### <Other Embodiments>

The present invention is not limited to the above described and illustrated embodiment. For example, the following embodiments are also included in the technical scope of the present invention.
(1) In the above embodiment, the joint pipes 51 are so provided as to penetrate through the upper wall of the cover 22 and the connecting tube portions 14A for measuring device and the connecting tube portion 15A for device provided on the upper surface of the block body 11 are fitted into the joint pipes 51 when the cover 22 is assembled with the base portion 21. However, the present invention is not limited to such a mode. For example, the joint pipes 51 may be provided on the base portion 21 like the exhaust pipe 28 provided on the base portion 21, and the connecting tube portions 14A for measuring device and the connecting tube portion 15A for device may be connected to the joint pipes 51 when the block body 11 is fixed to the base portion 21, so that nothing is connected when the cover 22 is assembled with the base portion 21.
(2) Although three intake connecting portions 61 of the measuring device 60, three pipes 53 for measuring device and three intake passages 14 for measuring device of the connector 50 are provided in the above embodiment, the present invention is not limited to such a mode. For example, there may be a combination of one, four or more intake connecting portions 61 of the measuring device 60, pipes 53 for measuring device and intake passages 14 for measuring device of the connector 50.
(3) Although the surface seal 18 is mounted at the outer peripheral portions of the base end portions of the connecting tube portion 15A for device and the connecting tube portions 14A for device on the upper end surface of the large box portion 12 to seal between the upper inner surface 29 of the cover 22 and the upper end surface of the large box portion 12 in the above embodiment, the present invention is not limited to such a mode. For example, O-rings may be mounted on the peripheral surfaces of the connecting tube portion 15A for device and the connecting tube portions 14A for device to seal clearances between the connecting tube portion 15A for device and the connecting tube portions 14A for device and the joint pipes 51, into which the connecting tube portion 15A for device and the connecting tube portions 14A for device are accommodated and fitted, instead of mounting the surfaced seal 18 on the upper end surface of the large box portion 12.

### LIST OF REFERENCE NUMERALS

- 10:: gas distribution unit
- 11:: block body
- 14:: air passage for measuring device
- 14A:: connecting tube portion for measuring device
- 15:: intake passage for device
- 15A:: connecting tube portion for device
- 16:: exhaust passage for device
- 18:: surface seal (seal member)
- 20:: case
- 21:: base portion
- 22:: cover
- 28:: exhaust pipe
- 42:: intake connecting portion
- 43:: exhaust connecting portion
- 53:: pipe for measuring device
- 54:: intake pipe
- 60:: measuring device
- 61:: intake connecting portion

## Claims

1. A gas distribution unit (10) including a block body (11) made of synthetic resin and to be fixed in or to a case (20) of an exhaust gas measuring apparatus (60), comprising:
an intake passage (15) for device having one end to be connected to an intake pipe (54) provided on the case (20) and the other end to be connected to an intake connecting portion (42) provided on a device (40) in or at the case (20);
an exhaust passage (16) for device having one end to be connected to an exhaust pipe (28) provided on the case (20) and the other end to be connected to an exhaust connecting portion (43) provided on the device (40); and
an air passage (14) for measuring device (60) having one end to be connected to a pipe (53) for measuring device (60) provided on the case (20) and the other end to be connected to an intake connecting portion (61) provided on a measuring device (60) in or at the case (20),
the intake passage (15) for device, the exhaust passage (16) for device and the air passage (14) for measuring device being provided in the block body (11).

2. A gas distribution unit according to claim 1, wherein the case (20) includes a base portion (21) to which the block body (11) is to be fixed, and a cover (22) to be mounted on the base portion (21) to cover a surface of the base portion (21).

3. A gas distribution unit according to claim 2, wherein the intake pipe (28) and the pipe (53) for measuring device (60) are so provided on an outer wall of the cover (22) as to penetrate through the cover (22).

4. A gas distribution unit according to claim 2 or 3, wherein a connecting tube portion (15A) for device provided at the one end of the intake passage (15) for device and a connecting tube portion (14A) for measuring device (60) provided at the one end of the air passage (14) for measuring device (60) are provided on the outer surface of the block body (11).

5. A gas distribution unit according to claim 4, wherein the connecting tube portion (14A) for device is to be connected to the intake pipe (54) and the connecting tube portion (14A) for measuring device (60) is connected to the pipe (53) for measuring device (60) when the cover (22) is mounted on the base portion (21).

6. A gas distribution unit according to claim 4 or 5, wherein a seal member (18) for sealing between the inner surface of the cover (22) and the upper surface of the block body (11) is provided at one or more outer peripheral portions of base end portions of the connecting tube portion (15A) for device and the connecting tube portion (14A) for measuring device.

7. A gas distribution unit according to any one of the preceding claims, wherein:
the cover (22) includes a plurality of pipes (53) for measuring device;
the measuring device (60) includes a plurality of intake connecting portions (61);and
the block body (21) is formed with a plurality of air passages (14) for measuring device (60) substantially corresponding to the pipes (53) for measuring device (60) and the intake connecting portions (42).

8. A gas distribution unit according to any one of the preceding claims 2 to 7, wherein an annular seal (26) is provided between the base portion (21) and the cover (22).

9. A gas distribution unit according to any one of the preceding claims, wherein one or more seal members (R) are provided to seal clearances between the intake connecting portions (61) and the connecting pipes (14B) for measuring device to prevent the exhaust gas or fluid from flowing into the case (20).

10. A gas distribution unit according to any one of the preceding claims, wherein one or more seal members (R) are provided to seal a clearance between the intake connecting portion (42) and the intake passage (15) for device to prevent the exhaust gas or fluid from flowing into the case (20).

11. A gas distribution unit according to any one of the preceding claims, wherein a connector (50) is provided on the case (20) and includes:
one or more joint pipes (51) to be connected to one or more respective mating joint pipes provided in a mating connector to introduce exhaust gas supplied from the mating connector into the case (20) and/or
one or more joint terminals (52) to one or more respective mating terminals provided in the mating connector.

12. A method of assembling a gas distribution unit (10), comprising the following steps:
arranging a block body (11) made of synthetic resin in or to a case (20) of an exhaust gas measuring apparatus (60) whereby one end of an exhaust passage (16) is connected to an exhaust pipe (28) provided on the case (20);
connecting one end of an intake passage (15) for device to an intake pipe (54) provided on the case (20) and the other end of the intake passage (15) to an intake connecting portion (42) provided on a device (40) in or at the case (20);
connecting the exhaust passage (16) for device to an exhaust connecting portion (43) provided on the device (40); and
connecting one end of an air passage (14) for measuring device (60) to a pipe (53) for measuring device (60) provided on the case (20) and the other end of the air passage (14) to an intake connecting portion (61) provided on a measuring device (60) in or at the case (20),
wherein the intake passage (15) for device, the exhaust passage (16) for device and the air passage (14) for measuring device being provided in the block body (11).

13. A method according to claim 12, wherein arranging the block body (11) in or to the case (20) comprises fixing the block body (11) to a base portion (21) of the case (20) and further comprising mounting a cover (22) on the base portion (21) to cover a surface of the base portion (21).

14. A method according to claim 13, wherein the intake pipe (28) and the pipe (53) for measuring device (60) are so provided on an outer wall of the cover (22) as to penetrate through the cover (22).

15. A method according to claim 13 or 14, wherein a connecting tube portion (15A) for device provided at the one end of the intake passage (15) for device and a connecting tube portion (14A) for measuring device (60) provided at the one end of the air passage (14) for measuring device (60) are provided on the outer surface of the block body (11), and/or wherein the connecting tube portion (14A) for device is to be connected to the intake pipe (54) and the connecting tube portion (14A) for measuring device (60) is connected to the pipe (53) for measuring device (60) when the cover (22) is mounted on the base portion (21).
